(19) Europäisches Patentamt
European Patent Office
Office européen des brevets

(11) Numéro de publication : **0 336 856 B1**

(12) # FASCICULE DE BREVET EUROPEEN

(45) Date de publication du fascicule du brevet : **03.03.93 Bulletin 93/09**

(51) Int. Cl.[5] : **C08G 73/14,** C08G 18/34, C08G 18/76, C08J 3/24, C07D 207/24, C09J 179/08

(21) Numéro de dépôt : **89420105.2**

(22) Date de dépôt : **23.03.89**

(54) **Polyamide-imides aromatiques fonctionnalisés par des groupes maléimido, un procédé pour leur préparation et leur emploi pour notamment préparer des polymères réticulés.**

(30) Priorité : **24.03.88 FR 8804137**

(43) Date de publication de la demande : **11.10.89 Bulletin 89/41**

(45) Mention de la délivrance du brevet : **03.03.93 Bulletin 93/09**

(84) Etats contractants désignés : **AT BE CH DE ES FR GB IT LI LU NL SE**

(56) Documents cités :
**EP-A- 0 173 211**
**WO-A-86/06386**
**DE-A- 3 240 934**
**FR-A- 2 166 209**
**GB-A- 2 110 225**
**US-A- 4 158 731**

(73) Titulaire : **CIBA-GEIGY AG**
**Klybeckstrasse 141**
**CH-4002 Basel (CH)**

(72) Inventeur : **Michaud, Philippe**
**19 rue du Tonkin**
**F-69100 Villeurbanne (FR)**
Inventeur : **Camberlin, Yves**
**68 bis Quai Clémenceau**
**F-69300 Caluire (FR)**

(74) Mandataire : **Zumstein, Fritz, Dr. et al**
**Zumstein & Klingseisen Patentanwälte**
**Bräuhausstrasse 4**
**W-8000 München 2 (DE)**

EP 0 336 856 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne de nouveaux polyamide-imides aromatiques dont les chaînes comportent des groupements terminaux de type maléimido éventuellement substitués sur la double liaison éthylénique. Elle concerne également un procédé de préparation de ces polyamide-imides fonctionnalisés en bout de chaînes. Elle a trait encore à leur utilisation pour notamment préparer des polymères réticulés.

On a déjà décrit dans la demande japonaise JA-A-61/293.966 des polyamide-imides à groupements terminaux du type alkényloxy qui sont obtenus en enchaînant les étapes suivantes : réaction de condensation en solution entre, notamment, le chlorure d'un monoanhydride d'acide tricarboxylique, une amine primaire aromatique hydroxylée et éventuellement une diamine biprimaire aromatique ; puis réaction d'éthérification effectuée, à l'aide d'un halogénure d'allyle, sur les groupements terminaux hydroxyles des oligomères formés à l'issue de la réaction de condensation. Toutefois, la mise en oeuvre d'un pareil procédé présente plusieurs inconvénients. Un de ces inconvénients, commun à la plupart des procédés où l'on fait réagir un réactif aminé avec un composé organique carbonylé comme un anhydride d'acide carboxylique, consiste dans la nécessité de réaliser la déshydratation cyclisante des (poly)amides-acides formés intermédiairement ; en effet, cette réaction étant équilibrée, il faut éliminer l'eau libérée et cette opération ne peut généralement pas être effectuée de manière complète en solution. Un autre inconvénient est lié à l'existence de la réaction d'éthérification dont on a parlé ci-avant ; cette réaction est conduite en présence d'un agent basique fort comme du méthylate de sodium et pareille condition n'est pas favorable à la stabilité des cycles imides, apportés par les oligomères déjà formés, qui peuvent s'ouvrir au moins en partie et entraîner de ce fait une dégradation des polyamide-imides désirés. Par ailleurs, les groupements terminaux de type alkényloxy de ces polyamide-imides antérieurs ne présentent pas une réactivité suffisante pour permettre leur emploi de manière avantageuse dans certaines applications comme les adhésifs.

Il a maintenant été trouvé, et c'est ce qui constitue l'objet de la présente invention, de nouveaux polyamide-imides fonctionnalisés en bout de chaînes par des groupements éthyléniquement insaturés ayant une réactivité supérieure à celle des groupements alkényloxy et qui, de plus, peuvent être préparés par un procédé ne présentant pas les inconvénients mentionnés ci-avant pour les procédés de l'art antérieur. Dans ce procédé, la cyclisation et la polymérisation simultanée conduisant à la formation directe de polyamide-imides fonctionnalisés linéaires s'accompagnent d'un dégagement de dioxyde de carbone, produit très volatil, qui ne risque pas d'altérer le polymère déjà formé ; en outre, dans ce procédé, il n'est pas nécessaire de faire appel à une réaction d'éthérification pendant la polymérisation.

Plus précisément, la présente invention concerne de nouveaux polyamide-imides aromatiques linéaires dont les chaînes comportent des groupements terminaux de type maléimido éventuellement substitués sur la double liaison éthylénique, caractérisés en ce qu'ils répondent à la formule suivante :

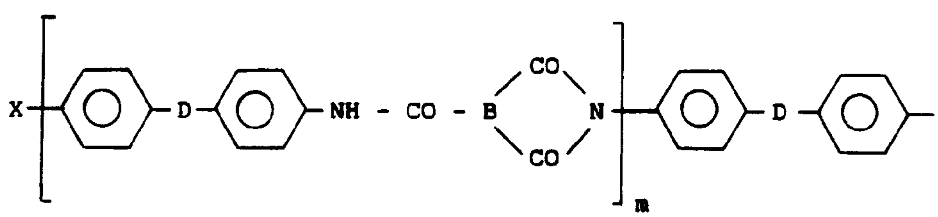
(I)

dans laquelle :

- les symboles D, identiques, représentent chacun un lien valentiel simple ou un groupement :

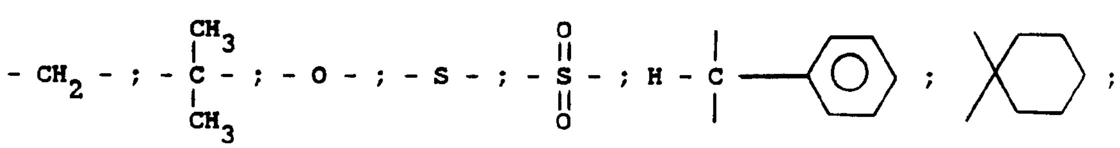

- le symbole B représente un radical trivalent consistant dans un radical aromatique possédant au moins 6 atomes de carbone, substitué ou non, ou dans deux de ces radicaux reliés entre eux par un lien valentiel simple ou un groupement :

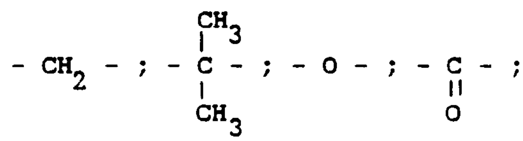

- le symbole m représente le nombre moyen des unités de récurrence ; ce nombre est au moins égal à 1 et il se situe plus précisément dans l'intervalle allant de 1 à 10 ;
- les symboles X, identiques, représentent chacun un radical de formule :

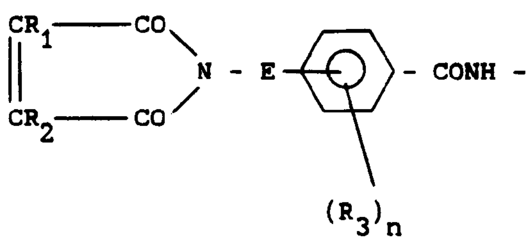

(II)

dans laquelle :

* les symboles $R_1$ et $R_2$, identiques ou différents représentent chacun un atome d'hydrogène ou un radical méthyle ;
* le symbole $R_3$ représente un radical méthyle ;
* n est un nombre entier égal à 0,1, 2 ou 3 ;
* le symbole E représente un lieu valentiel simple ou un groupement $-CH_2-$ et se trouve en position ortho, méta ou para par rapport à l'atome de carbone du cycle benzénique relié au groupe CONH.

Les polyamide-imides conformes aux définitions précédentes sont préparés par chauffage, en opérant à une température allant de 50°C à 200°C et en présence d'un solvant organique ou mélange de solvants organiques, des réactifs (i), (2i) et (3i) suivants, lesdits réactifs étant mis à réagir simultanément :

- (i) est un diisocyanate de formule :

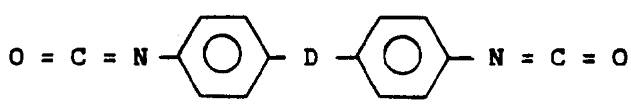

(III)

dans laquelle D a la signification donnée ci-avant dans la formule (I) ;
- (2i) est un monoanhydride d'acide tricarboxylique de formule :

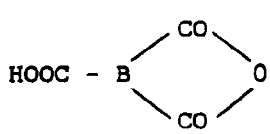

(IV)

dans laquelle B a la signification donnée ci-avant dans la formule (I) ; et
- (3i) est un monoacide carboxylique substitué par un groupe maléimido (lui-même éventuellement substitué) sur le reste attaché au groupe carboxy, de formule :

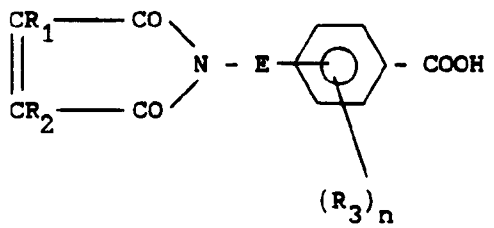

(V)

dans laquelle les symboles $R_1$, $R_2$, $R_3$, n et E ont les significations données ci-avant dans la formule (II) ;

- les proportions respectives des réactifs (i) et (2i) étant choisies de façon que le rapport r :

$$\frac{\text{nombre de moles de diisocyanate (i)}}{\text{nombre de moles d'anhydride (2i)}}$$

se situe dans l'intervalle allant de 1,05/1 à 2/1 ;

- la proportion du réactif (3i) étant choisie de façon que le rapport r' :

$$\frac{\text{nombre de moles d'acide maléimidocarboxylique(3i)}}{\text{nombre de moles de diisocyanate (i)} - \text{nombre de moles d'anhydride (2i)}}$$

soit égal à 2.

A titre d'exemples spécifiques de diisocyanate (i) de formule (III) qui conviennent bien, on peut citer en particulier :

- le diisocyanato-4,4'-diphényl-2,2-propane,
- le diisocyanato-4,4'-diphénylméthane,
- le diisocyanato-4,4'-biphényle,
- le diisocyanato-4,4'-diphénylsulfure,
- le diisocyanato-4,4'-diphénylsulfone,
- le diisocyanato-4,4'-diphényléther,
- le diisocyanato-4,4'-diphényl-1,1-cyclohexane.

On utilise de préférence, pour la mise en oeuvre de la présente invention, le diisocyanato-4,4'-diphénylméthane et le diisocyanato-4,4'-diphényléther.

A titre d'exemples spécifiques de monoanhydrides d'acides tricarboxyliques (2i) de formule (IV) qui conviennent bien, on peut citer en particulier :

- le monoanhydride d'acide trimellique,
- le monoanhydride-2,3 d'acide naphtalène-tricarboxylique-2,3,6,
- le monoanhydride-1,8 d'acide naphtalène-tricarboxylique-1,8,4,
- le monoanhydride-1,2 d'acide naphtalène-tricarboxylique-1,2,5,
- le monoanhydride-3,4 d'acide diphényl-tricarboxylique-3,4,4',
- le monoanhydride-3,4 d'acide diphényl-éther-tricarboxylique-3,4,4',
- le monoanhydride-3,4 d'acide benzophénone-tricarboxylique-3,4,4',
- le monoanhydride-3,4 d'acide diphényl-isopropylidène-tricarboxylique-3,4,3'.

On utilise de préférence, pour la mise en oeuvre de la présente invention, le monoanhydride d'acide trimellique.

A titre d'exemples spécifiques de monoacides carboxyliques à substituant maléimido (lui-même éventuellement substitué) (3i) de formule (V) qui conviennent bien, on peut citer en particulier :

- l'acide maléimido-2 benzoïque,
- l'acide maléimido-3 benzoïque,
- l'acide maléimido-4 benzoïque,
- l'acide citraconimido-2 benzoïque,
- l'acide citraconimido-3 benzoïque,
- l'acide citraconimido-4 benzoïque,
- l'acide (maléimidométhyl)-4 benzoïque.

On utilise de préférence, pour la mise en oeuvre de la présente invention, l'acide maléimido-4 benzoïque et l'acide citraconimido-4 benzoïque.

Les monoacides carboxyliques (3i) sont des composés connus de l'art antérieur (cf. notamment Chemical Abstracts, 104, 19508j (1986). Ils peuvent être notamment préparés en faisant réagir en solution un acide aminocarboxylique de formule :

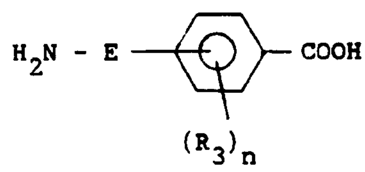

(VI)

dans laquelle les symboles $R_3$, n et E ont les significations données ci-avant dans la formule (II) avec l'anhydride de formule :

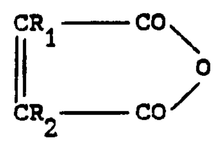

(VII)

dans laquelle les symboles $R_1$ et $R_2$ ont les significations données ci-avant dans la formule (II), en opérant en présence d'anhydride acétique et par exemple de triéthylamine et d'un sel de nickel.

La réaction permettant de préparer les polyamide-imides selon la présente invention est conduite en milieu homogène par addition aux réactifs (i), (2i) et (3i) d'un solvant ou mélange de solvants communs aux réactifs et au produit formé. Les solvants qui conviennent bien sont les solvants polaires, en particulier le N,N-diméthylacétamide, le N,N-diméthylformamide, la N-méthyl-pyrrolidone-2, le diméthyl-sulfoxyde, la tétraméthyl-1,1,3,3 urée, la diméthyl-1,3 urée et un mélange de ces solvants ; ils doivent de plus être parfaitement anhydres.

De manière préférentielle, les proportions des réactifs (i) et (2i) sont choisies de façon que le rapport r :

$$\frac{\text{nombre de moles de diisocyanate (i)}}{\text{nombre de moles d'anhydride (2i)}}$$

se situe dans l'intervalle allant de 1,1/1 à 1,5/1.

La réaction de polymérisation est effectuée à une température comprise entre 50°C et 200°C ; les meilleurs résultats sont obtenus à des températures comprises entre 80°C et 190°C.

Pratiquement, on dissout les réactifs de départ, qui sont engagés ensemble, dans le (ou les) solvant(s) en opérant à chaud entre 50°C et 150°C, et de préférence entre 80°C et 120°C, puis on laisse réagir le milieu sous agitation à une température qui est maintenue égale à la température de dissolution précitée ou élevée, de manière directe ou progressive, à une valeur au plus égale à 200°C, et de préférence au plus égale à 190°C, pendant une durée de réaction qui va varier dans une large mesure en fonction des conditions précises de température adoptées. De manière très préférentielle, la réaction permettant de préparer les polyamide-imides selon la présente invention est conduite en présence d'un inhibiteur de polymérisation des doubles liaisons éthyléniques des groupements maléimido (éventuellement substitués) ; à titre d'exemples spécifiques d'inhibiteurs utilisables, on peut citer en particulier l'hexaphénylazobenzène, l'azobenzène, la benzoquinone, le diméthyldithiocarbamate de zinc ou de cuivre, le triphénylphosphite.

La quantité d'inhibiteur, quand on choisit d'en utiliser un, représente généralement de 0,1 à 2 % du poids total des réactifs (i), (2i) et (3i) mis en solution.

La réaction permettant de préparer les polyamide-imides selon la présente invention peut être conduite en outre en présence d'un catalyseur approprié. Les catalyseurs utilisables le cas échéant sont des composés organiques ne comportant pas de groupements fonctionnels à hydrogène mobile susceptible de réagir avec les groupes isocyanates. Conviennent bien dans cette optique notamment les amines tertiaires appartenant à la famille des composés mono- ou polycycliques ayant au moins un atome d'azote tertiaire intra- et/ou extracyclique ; à titre d'exemples spécifiques de catalyseurs utilisables, on peut citer en particulier : le diazo-1,4-bicyclo [2,2,2] octane, les N,N'-dialkylpipérazines, la N-alkylmorpholine, la N-alkylpipéridine dans lesquelles le radical alkyle est un radical méthyle et/ou éthyle. On peut également envisager d'utiliser comme catalyseurs des sels de métaux ; à titre d'exemples spécifique de pareils catalyseurs, on peut citer en particulier : le dilaurate de dibutylétain, l'acétylacétonate de cobalt.

La quantité de catalyseur, quand on choisit d'en utiliser un, représente généralement de 0,1 à 2 % du poids total des réactifs (i), (2i) et (3i) mis en solution.

En fin de réaction, le polyamide-imide est obtenu sous forme de solution. On peut le faire précipiter par addition dans le milieu réactionnel d'un non-solvant ou d'un mélange de non-solvants et séparer le polymère précipité du milieu réactionnel. Les non-solvants convenables sont par exemple l'eau, l'acétone, le tétrahydro-

furanne, le toluène ou tout autre solvant ne solubilisant pas le polymère souhaité. Il est aussi possible d'obtenir le polymère par évaporation du (ou des) solvant(s) du milieu réactionnel dans une étuve ventilée.

Ces polyamide-imides fonctionnalisés, sous forme de solution, se prêtent bien à la fabrication notamment de fibres, de films de revêtement, des vernis isolants, de matières adhésives et cela soit lors de l'évaporation du solvant, soit ultérieurement. Sous forme précipitée, ces polymères peuvent servir pour la fabrication notamment de produits conformés en utilisant les techniques du moulage par compression.

Un avantage de ces polyamide-imides réside sans le fait que, grâce à leurs groupements terminaux de type maléimido très réactifs, ils peuvent être transformés, à un moment quelconque de leur mise en forme (de préférence après mise en forme), en polymères réticulés doués d'excellentes propriétés mécaniques et électriques ainsi que d'une grande inertie chimique à des températures de 200°C à 300°C. Cette réticulation est opérée par simple chauffage à une température comprise entre 150°C et 300°C pendant un temps déterminé en présence éventuellement d'un initiateur de polymérisation radicalaire ou d'un catalyseur de polymérisation anionique.

Les polyamide-imides selon la présente invention peuvent encore être engagés dans des réactions de copolymérisation avec un ou plusieurs autre(s) composé(s) ayant des groupes capables de réagir avec les doubles liaisons réactives des groupements terminaux de type maléimido.

les exemples qui suivent sont donnés à titre illustratif, mais non limitatif.

EXEMPLE 1 :

1. Exemple de mise en oeuvre de la présente invention :

Dans un réacteur en verre de 250 $cm^3$, muni d'une agitation centrale de type ancre et d'un réfrigérant ascendant, dans lequel on établit une légère surpression d'azote sec et qui est préchauffé à 100°C à l'aide d'un bain d'huile approprié, on introduit successivement :

- 11,7 g (0,0609 mole) de monoanhydride d'acide trimellique,
- 18,3 g (0,0732 mole) de diisocyanato-4,4'-diphénylméthane,
- 5,34 g (0,0246 mole) d'acide maléimido-4 benzoïque,
- 0,27 g de benzoquinone, et
- 70 g de N-méthyl-pyrrolidone-2.

On laisse réagir pendant 3 heures 45 minutes sous agitation, en maintenant la température du milieu réactionnel à 100°C.

La solution de polymère ainsi obtenue est une masse liquide de couleur rouge sombre ayant un poids de 99 g (elle renferme 29,1 g de polymère). Par analyse infra-rouge, on ne détecte pas de fonctions NCO.

Le polymère qui a été ainsi préparé sous forme de solution répond essentiellement à la formule suivante :

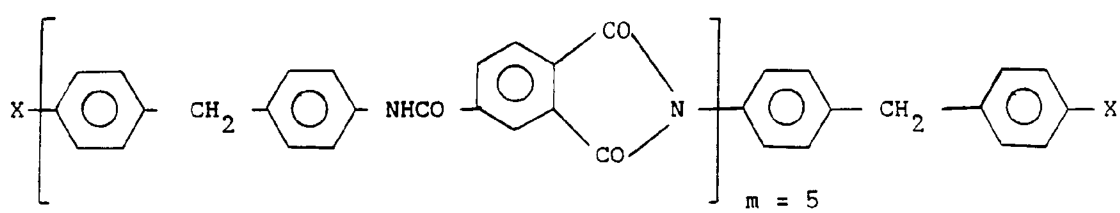

avec X =

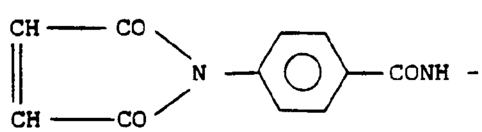

A l'aide de la solution de polymère obtenue, on enduit une tresse de verre de type E, ayant un poids de 50 g/$m^2$ et ensimée par du γ-aminopropyltriéthoxysilane commercialisé par la Société UNION CARBIDE sous la marque Silane A 1100. Cette tresse imprégnée est séchée en utilisant un protocole de séchage consistant en 8 opérations de 5 minutes chacune à 120°C. L'adhésif supporté ainsi obtenu est ensuite pressé entre deux éprouvettes d'acier inoxydable, dont les dimensions sont celles prévues dans la norme ASTM 1002, en opérant

à 230°C pendant 15 minutes et sous une pression de maintien de 0,5 MPa. Au bout de ce temps, on enlève la pression et on place les éprouvettes dans une étuve ventilée, où règne une température de 250°C, pendant une durée de 1 heure. Ces éprouvettes sont ensuite rompues par un test de déchirement suivant la norme ASTM 1002. les valeurs de contrainte à la rupture sont les suivantes : valeur moyenne = 21,3 MPa ; valeur maximale = 23 MPa.

2. Description du procédé de préparation de l'acide maléimido-4 benzoïque :

Dans un réacteur agité, muni d'un réfrigérant ascendant et préchauffé à 60°C à l'aide d'un bain d'huile approprié, on introduit simultanément en 10 minutes :

- 50 g (0,365 mole) d'acide amino-4 benzoïque en solution dans 100 $cm^3$ d'acétone, et
- 39,4 g (0,402 mole) d'anhydride maléique en solution dans 39,4 $cm^3$ d'acétone.

On laisse réagir pendant 20 minutes sous agitation. Au bout de ce temps, on introduit successivement :

- 12,3 g (0,122 mole) de triéthylamine,
- 0,4 g d'acétate de nickel, et
- 44,7 g (0,438 mole) d'anhydride acétique.

On laisse réagir à 60°C pendant 3 heures 15 minutes sous agitation. Au bout de ce temps, on refroidit jusqu'à 20°C, ce qui provoque la formation d'un précipité beige. On précipite complètement le produit par ajout de 500 $cm^3$ d'eau glacée. Après séchage à 50°C, sous $53.10^2$ Pa, pendant 12 heures, on obtient 68,7 g d'un produit blanc présentant un point de fusion de 230°C mesuré par analyse thermique différentielle et ayant une structure conforme à celle de l'acide maléimido-4 benzoïque selon les analyses RMN du proton effectuées.

<u>EXEMPLE 2</u> :

On opère comme indiqué ci-avant à l'exemple 1, mais à partir des charges suivants :

- 29,25 g (0,152 mole) de monoanhydride d'acide trimellique,
- 45,75 g (0,183 mole) de diisocyanato-4,4'-diphénylméthane,
- 13,45 g (0,062 mole) d'acide maléimido-4 benzoïque,
- 0,675 g de benzoquinone, et
- 175 g de N-méthyl-pyrrolidone-2.

On laisse réagir pendant 4 heures 30 minutes.

La solution de polymère ainsi obtenue est une masse liquide de couleur rouge sombre ayant un poids de 248 g (elle renferme 73 g de polymère). Par analyse infra-rouge, on ne détecte pas de fonction NCO.

Le polymère qui a été ainsi préparé sous forme de solution répond essentiellement à la formule donnée dans l'exemple 1, dans laquelle le symbole m est aussi égal à 5.

Le polyamide-imide est précipité par addition d'eau dans la solution où il se trouve dissout. Dans cette optique, on introduit progressivement, sous agitation, 50 g de cette solution dans 500 $cm^3$ d'eau. Le précipité obtenu est filtré, lavé avec de l'eau, puis il est séché à 100°C pendant 24 heures sous un vide de $53,2.10^2$ Pa. La poudre obtenue est ensuite finement broyée et tamisée pour retenir des particles inférieures à 200 μm, puis elle est chauffée à 200°C pendant 2 heures.

Cette poudre, tamisée et chauffée comme indiqué ci-avant, est introduite, en quantité de 7,5 g, dans un moule cylindrique (diamètre : 5 cm) et on installe l'ensemble entre les deux plateaux circulaires (adaptés à la taille du moule) d'une presse préchauffés à 300°C et sur lesquels on applique une pression de 14,7 MPa. Lorsque la température de la matière a atteint 300°C, on maintient l'ensemble dans ces conditions pendant 1 heure encore. On laisse ensuite refroidir le moule et son contenu pendant 12 heures sous 1 MPa de pression. Après démoulage, on obtient un objet moulé cylindrique (diamètre : 5 cm ; hauteur : 3 mm) présentant les caractéristiques mécaniques en flexion suivantes (mesurées selon les indications de la norme ASTM D 790 M ; portée = 35 mm) :

- résistance en flexion : 155 MPa,
- module en flexion : 3100 MPa.

<u>EXEMPLE 3:</u>

1. On opère comme indiqué ci-avant à l'exmple 1, mais à partir des réactifs suivants :

- 29,3 g (0,1172 mole) de diisocyanato-4,4'-diphénylméthane,
- 18,7 g (0,0974 mole) de monoanhydride d'acide trimellique,
- 9,14 g (0,0396 mole) d'acide citraconimido-4 benzoïque,

- 0,09 g de benzoquinone, et
- 133 g de N-méthyl-pyrrolidone-2.

On laisse réagir pendant 6 heures, sous bonne agitation, en suivant le cycle de montée en température ci-dessous indiqué :

- 3 heures à 100°C, puis
- 3 heures à 185°C.

Le collodion ainsi obtenu est une masse liquide de couleur brune ayant un poids de 180 g (il renferme 47 g de polymère). Par analyse infra-rouge, on ne détecte pas de fonctions anhydride et NCO dans le collodion.

Les opérations de précipitation du collodion dans l'eau, de lavage et de séchage du précipité formé sont identiques à celles décrites à l'exemple 2. On obtient une poudre beige qui est ensuite finement broyée et tamisée (particules inférieures à 200 µm).

Le polymère qui a été préparé sous forme de poudre répond essentiellement à la formule suivante :

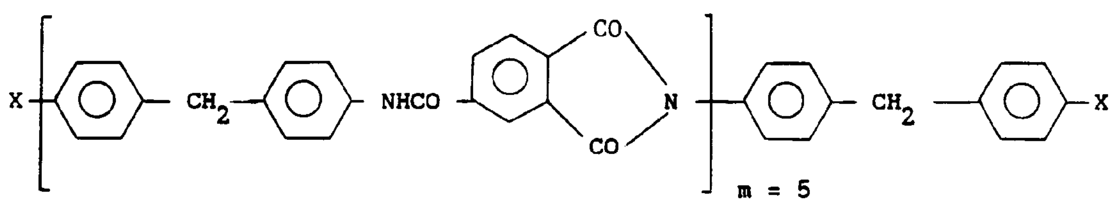

avec X =

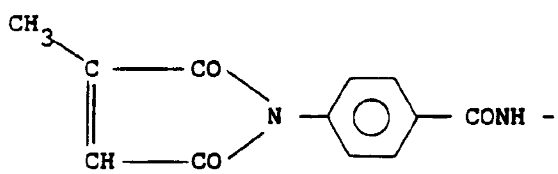

Cette poudre est moulée par compression selon le mode opératoire décrit à l'exemple 2.

Après démoulage, on obtient un objet moulé cylindrique (diamètre 5 cm, hauteur 3 mm) présentant les caractéristiques mécaniques en flexion suivantes (mesurées selon les indications de la norme ASTM D 790 M ; portée 35 mm).

- résistance en flexion : 80 MPa,
- module en flexion : 3500 MPa.

2. Description du procédé de préparation de l'acide citraconimido-4 benzoïque.

On opère comme indiqué à l'exemple 1, mais à partir des réactifs suivants :

- 50 g (0,365 mole) d'acide amino-4 benzoïque en solution dans 100 $cm^3$ d'acétone, et
- 45 g (0,402 mole) d'anhydride citraconique en solution dans 45 $cm^3$ d'acétone.

On laisse réagir pendant 25 minutes sous agitation.

Au bout de ce temps, on introduit successivement :

- 12,3 g (0,122 mole) de triéthylamine
- 0,4 g d'acétate de nickel, et
- 44,7 g (0,438 mole) d'anhydride acétique.

On laisse réagir à 60°C pendant 3 heures 15 minutes sous agitation. La précipitation du produit dans l'eau ainsi que le lavage et le séchage du précipité formé sont identiques aux opérations décrites à l'exemple 1. On obtient 67 g d'un produit jaune clair qui contient 20 % en mole d'acide N-(carboxy-4 phényl)citraconamique et 80 % en mole d'acide citraconimido-4 benzoïque. 50 g de ce produit sont purifiés par neutralisation de l'acide de N-(carboxy-4 phényl)citraconamique par 5 g (0,0595 mole) d'hydrogénocarbonate de sodium dans 300 g d'acétone.

Après addition de 400 $cm^3$ d'eau, l'acide souhaité est extrait par 400 g d'acétate d'éthyle, concentré au moyen d'un évaporateur rotatif sous $53.10^2$ Pa à 50°C, puis recristallisé dans l'acétone. Après filtration et séchage à 100°C, sous $53.10^2$ Pa, on obtient 22 g d'un solide jaune clair présentant un point de fusion de 190°C

mesuré par analyse thermique différentielle et ayant une structure conforme à celle de l'acide citraconimido-4 benzoïque selon les analyses RMN du proton effectuées.

## Revendications

**Revendications pour les Etats contractants suivants : AT, BE, CH, DE, FR, GB, IT, LI, LU, NL, SE**

**1.** Polyamide-imides aromatiques linéaires dont les chaînes comportent des groupements terminaux de type maléimido éventuellement substitués sur la double liaison éthylénique, caractérisés en ce qu'ils répondent à la formule suivante :

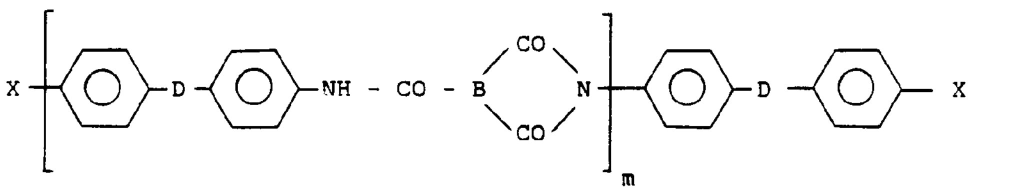

(I)

dans laquelle :

- les symboles D, identiques, représentent chacun un lien valentiel simple ou un groupement :

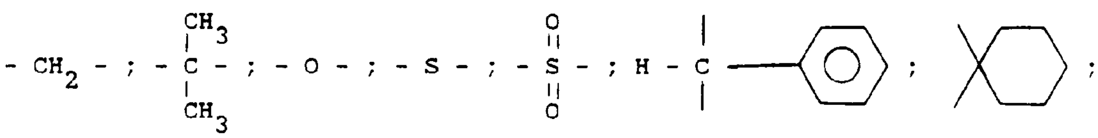

- le symbole B représente un radical trivalent consistant dans un radical aromatique possédant au moins 6 atomes de carbone, substitué ou non, ou dans deux de ces radicaux reliés entre eux par un lien valentiel simple ou un groupement :

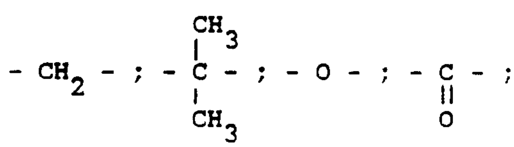

- le symbole m représente le nombre moyen des unités de récurrence ; ce nombre est au moins égal à 1 ;
- les symboles X, identiques, représentent chacun un radical de formule :

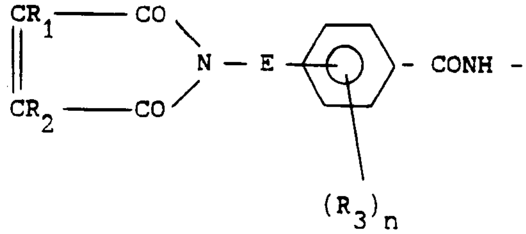

(II)

dans laquelle :

∗ les symboles $R_1$ et $R_2$, identiques ou différents représentent chacun un atome d'hydrogène ou un

radical méthyle ;
* le symbole $R_3$ représente un radical méthyle ;
* n est un nombre entier égal à 0,1, 2 ou 3 ;
* le symbole E représente un lieu valentiel simple ou un groupement $-CH_2-$ et se trouve en position ortho, méta ou para par rapport à l'atome de carbone du cycle benzénique relié au groupe CONH.

2. Procédé de préparation des polyamide-imides selon la revendication 1, caractérisé en ce qu'il consiste à effectuer le chauffage, en opérant à une température allant de 50°C à 200°C et en présence d'un solvant organique ou mélange de solvants organiques, des réactifs (i), (2i) et (3i) suivants, lesdits réactifs étant mis à réagir simultanément :
   - (i) est un diisocyanate de formule :

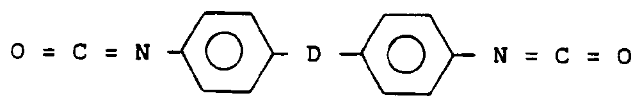

(III)

   dans laquelle D a la signification donnée ci-avant dans la formule (I) ;
   - (2i) est un monoanhydride d'acide tricarboxylique de formule :

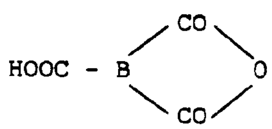

(IV)

   dans laquelle B a la signification donnée ci-avant dans la formule (I) ; et
   - (3i) est un monoacide carboxylique substitué par un groupe maléimido (lui-même éventuellement substitué) sur le reste attaché au groupe carboxy, de formule :

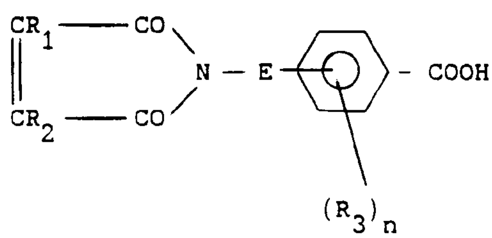

(V)

   dans laquelle les symboles $R_1$, $R_2$, $R_3$, n et E ont les significations données ci-avant dans la formule (II) ;
   - les proportions respective des réactifs (i) et (2i) étant choisies de façon que le rapport r :

$$\frac{\text{nombre de moles de diisocyanate (i)}}{\text{nombre de moles d'anhydride (2i)}}$$

   se situe dans l'intervalle allant de 1,05/1 à 2/1 ;
   - la proportion du réactif (3i) étant choisie de façon que le rapport r' :

$$\frac{\text{nombre de moles d'acide maléimidocarboxylique(3i)}}{\text{nombre de moles de diisocyanate (i)} - \text{nombre de moles d'anhydride (2i)}}$$

   soit égal à 2.

3. Procédé de préparation selon la revendication 2, caractérisé en ce que le diisocyanate (i) de formule (III) est choisi dans le groupe formé par :
   - le diisocyanato-4,4'-diphényl-2,2-propane,
   - le diisocyanato-4,4'-diphénylméthane,
   - le diisocyanato-4,4'-biphényle,
   - le diisocyanato-4,4'-diphénylsulfure,
   - le diisocyanato-4,4'-diphénylsulfone,
   - le diisocyanato-4,4'-diphényléther,

- le diisocyanato-4,4′-diphényl-1,1,-cyclohexane.

4. Procédé de préparation selon l'une quelconque des revendications 2 et 3, caractérisé en ce que le monoanhydride d'acide tricarboxylique (2i) de formule (IV) est choisi dans le groupe formé par :
   - le monoanhydride d'acide trimellique,
   - le monoanhydride-2,3 d'acide naphtalène-tricarboxylique-2,3,6,
   - le monoanhydride-1,8 d'acide naphtalène-tricarboxylique-1,8,4,
   - le monoanhydride-1,2 d'acide naphtalène-tricarboxylique-1,2,5,
   - le monoanhydride-3,4 d'acide diphényl-tricarboxylique-3,4,4′,
   - le monoanhydride-3,4 d'acide diphényl-éther-tricarboxylique-3,4,4′,
   - le monoanhydride-3,4 d'acide benzophénone-tricarboxylique-3,4,4′,
   - le monoanhydride-3,4 d'acide diphényl-isopropylidène-tricarboxylique-3,4,3′.

5. Procédé de préparation selon l'une quelconque des revendications 2 à 4, caractérisé en ce que le monoacide carboxylique à substituant de type maléimido (3i) de formule (IV) est choisi dans le groupe formé par :
   - l'acide maléimido-2 benzoïque,
   - l'acide maléimido-3 benzoïque,
   - l'acide maléimido-4 benzoïque,
   - l'acide citraconimido-2 benzoïque,
   - l'acide citraconimido-3 benzoïque,
   - l'acide citraconimido-4 benzoïque,
   - l'acide (maléimidométhyl)-4 benzoïque.

6. Procédé de préparation selon l'une quelconque des revendications 2 à 5, caractérisé en ce que l'on dissout les réactifs de départ (i), (2i) et (3i), qui sont engagés ensemble, dans un solvant organique ou dans un mélange de solvants organiques en opérant à chaud entre 50°C et 150°C, puis on laisse réagir le milieu sous agitation à une température qui est maintenue égale à la température de dissolution précitée ou au besoin élevée, de manière directe ou progressive, à une valeur au plus égale à 200°C, pendant une durée de réaction qui va varier dans une large mesure en fonction des conditions précises de température adoptées.

7. Procédé de préparation selon l'une quelconque des revendications 2 à 6, caractérisé en ce que les solvants mis en oeuvre sont pris dans le groupe formé par : le N,N-diméthyl-acétamide, le N,N-diméthylformamide, la N-méthyl-pyrrolidone-2, le diméthyl-sulfoxyde, la tétraméthyl-1,1,3,3 urée, la diméthyl-1,3 urée et un mélange de ces solvants.

8. Utilisation des polyamide-imides fonctionnalisés selon la revendication 1 pour la préparation de polymères réticulés par chauffage à une température comprise entre 150°C et 300°C en présence éventuellement d'un initiateur de polymérisation radicalaire ou d'un catalyseur de polymérisation anionique.

**Revendications pour l'Etat contractant suivant : ES**

1. Procédé de préparation de polyamide-imides aromatiques linéaires dont les chaînes comportent des groupements terminaux de type maléimido éventuellement substitués sur la double liaison éthylénique, qui répondent à la formule suivante :

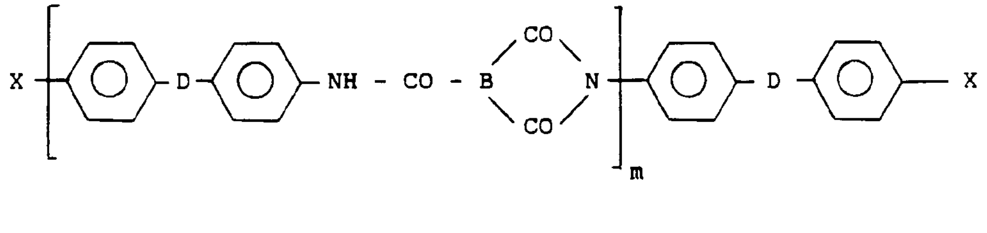

(I)

dans laquelle :
   - les symboles D, identiques, représentent chacun un lien valentiel simple ou un groupement :

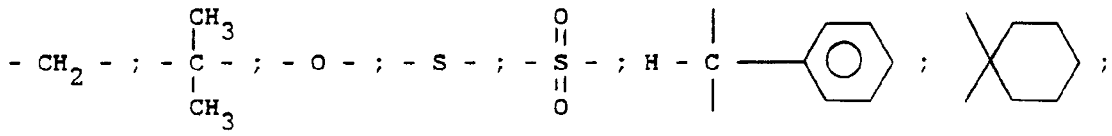

- le symbole B représente un radical trivalent consistant dans un radical aromatique possédant au moins 6 atomes de carbone, substitué ou non, ou dans deux de ces radicaux reliés entre eux par un lien valentiel simple ou un groupement :

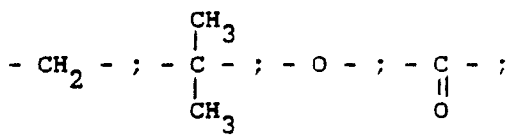

- le symbole m représente le nombre moyen des unités de récurrence ; et il est au moins égal à 1 ;
- les symboles X, identiques, représentent chacun un radical de formule :

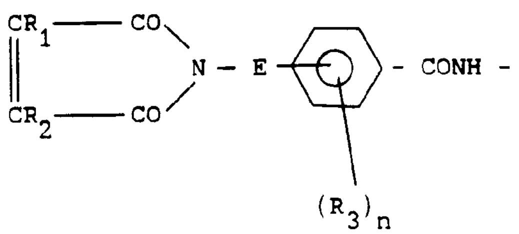

(II)

dans laquelle :

* les symboles $R_1$ et $R_2$, identiques ou différents représentent chacun un atome d'hydrogène ou un radical méthyle ;
* le symbole $R_3$ représente un radical méthyle ;
* n est un nombre entier égal à 0,1, 2 ou 3 ;
* le symbole E représente un lieu valentiel simple ou un groupement $-CH_2-$ et se trouve en position ortho, méta ou para par rapport à l'atome de carbone du cycle benzénique relié au groupe CONH ;

ledit procédé étant caractérisé et ce qu'il consiste à effectuer le chauffage, en opérant à une température allant de 50°C à 200°C et en présence d'un solvant organique ou mélange de solvants organiques, des réactifs (i), (2i) et (3i) suivants, lesdits réactifs étant mis à réagir simultanément :

- (i) est un diisocyanate de formule :

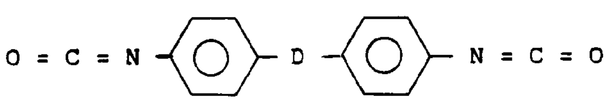

(III)

dans laquelle D a la signification donnée ci-avant dans la formule (I) ;

- (2i) est un monoanhydride d'acide tricarboxylique de formule :

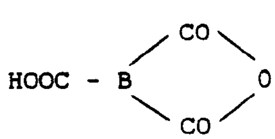

(IV)

dans laquelle B a la signification donnée ci-avant dans la formule (I) ; et

- (3i) est un monoacide carboxylique substitué par un groupe maléimido (lui-même éventuellement substitué) sur le reste attaché au groupe carboxy, de formule :

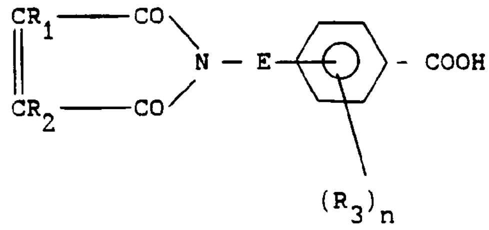

(V)

dans laquelle les symboles $R_1$, $R_2$, $R_3$, n et E ont les significations données ci-avant dans la formule (II) ;

- les proportions respectives des réactifs (i) et (2i) étant choisies de façon que le rapport r :

$$\frac{\text{nombre de moles de diisocyanate (i)}}{\text{nombre de moles d'anhydride (2i)}}$$

se situe dans l'intervalle allant de 1,05/1 à 2/1 ;

- la proportion du réactif (3i) étant choisie de façon que le rapport r' :

$$\frac{\text{nombre de moles d'acide maléimidocarboxylique (3i)}}{\text{nombre de moles de diisocyanate (i)} - \text{nombre de moles d'anhydride (2i)}}$$

soit égal à 2.

**2.** Procédé de préparation selon la revendication 1, caractérisé en ce que le diisocyanate (i) de formule (III) est choisi dans le groupe formé par :
- le diisocyanato-4,4′-diphényl-2,2-propane,
- le diisocyanato-4,4′-diphénylméthane,
- le diisocyanato-4,4′-biphényle,
- le diisocyanato-4,4′-diphénylsulfure,
- le diisocyanato-4,4′-diphénylsulfone,
- le diisocyanato-4,4′-diphényléther,
- le diisocyanato-4,4′-diphényl-1,1-cyclohexane.

**3.** Procédé de préparation selon l'une quelconque des revendications 1 et 2, caractérisé en ce que le monoanhydride d'acide tricarboxylique (2i) de formule (IV) est choisi dans le groupe formé par :
- le monoanhydride d'acide trimellique,
- le monoanhydride-2,3 d'acide naphtalène-tricarboxylique-2,3,6,
- le monoanhydride-1,8 d'acide naphtalène-tricarboxylique-1,8,4,
- le monoanhydride-1,2 d'acide naphtalène-tricarboxylique-1,2,5,
- le monoanhydride-3,4 d'acide diphényl-tricarboxylique-3,4,4′,
- le monoanhydride-3,4 d'acide diphényl-éther-tricarboxylique-3,4,4′,
- le monoanhydride-3,4 d'acide benzophénone-tricarboxylique-3,4,4′,
- le monoanhydride-3,4 d'acide diphényl-isopropylidène-tricarboxylique-3,4,3′.

**4.** Procédé de préparation selon l'une quelconque des revendications 1 à 3, caractérisé en ce que le monoacide carboxylique à substituant de type maléimido (3i) de formule (V) est choisi dans le groupe formé par :
- l'acide maléimido-2 benzoïque,
- l'acide maléimido-3 benzoïque,
- l'acide maléimido-4 benzoïque,
- l'acide citraconimido-2 benzoïque,
- l'acide citraconimido-3 benzoïque,
- l'acide citraconimido-4 benzoïque,
- l'acide (maléimidométhyl)-4 benzoïque.

**5.** Procédé de préparation selon l'une quelconque des revendications 1 à 4, caractérisé en ce que l'on dissout les réactifs de départ (i), (2i) et (3i), qui sont engagés ensemble, dans un solvant organique ou dans un mélange de solvants organiques en opérant à chaud entre 50°C et 150°C, puis on laisse réagir le milieu sous agitation à une température qui est maintenue égale à la température de dissolution précitée ou au besoin élevée de manière directe ou progressive, à une valeur au plus égale à 200°C, pendant une durée

de réaction qui va varier dans une large mesure en fonction des conditions précises de température adoptées.

6. Procédé de préparation selon l'une quelconque des revendications 1 à 5, caractérisé en ce que les solvants mis en oeuvre sont pris dans le groupe formé par : le N,N-diméthyl-acétamide, le N,N-diméthylformamide, la N-méthyl-pyrrolidone-2, le diméthyl-sulfoxyde, la tétraméthyl-1,1,3,3 urée, la diméthyl-1,3 urée et un mélange de ces solvants.

## Patentansprüche

### Patentansprüche für folgende Vertragsstaaten : AT, BE, CH, DE, FR, GB, IT, LI, LU, NL, SE

1. Lineare aromatische Polyamid-Imide, deren Ketten End-Gruppen vom Maleimido-Typ umfassen, gegebenenfalls substituiert an der ethylenischen Doppelbindung, dadurch gekennzeichnet, daß sie der folgenden Formel (I) entsprechen

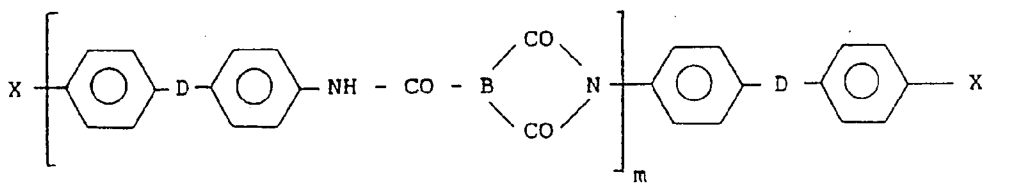 (I)

in der
- die jeweils gleichen Symbole D eine einfache Valenzbindung oder eine Gruppe

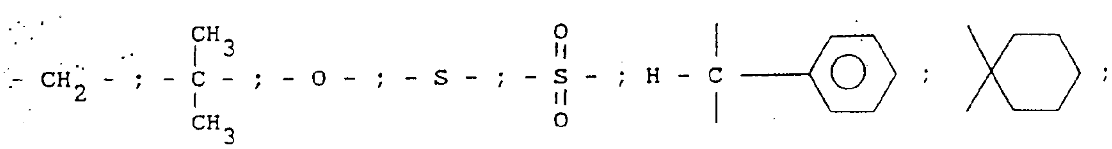

darstellen;
- das Symbol B einen trivalenten Rest bedeutet, der aus einem aromatischen, substituierten oder nicht substituierten Rest mit mindestens 6 Kohlenstoffatomen besteht, oder aus zwei dieser untereinander durch eine einfache Valenzbindung oder eine Gruppe

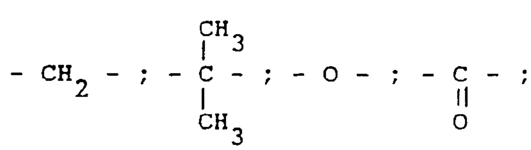

verbundenen Reste,
- das Symbol m eine mittlere Anzahl von wiederkehrenden Einheiten bedeutet, wobei diese Zahl mindestens 1 ist;
- die jeweils gleichen Symbole X einen Rest der Formel (II)

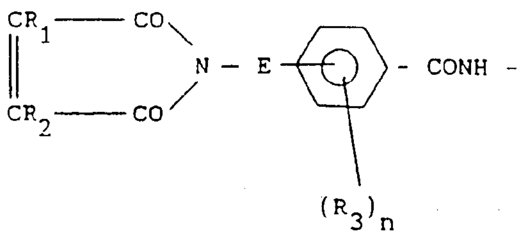

(II)

bedeuten, in der

- die Symbole $R_1$ und $R_2$, gleich oder verschieden, jeweils ein Wasserstoffatom oder einen Methyl-Rest darstellen;
- das Symbol $R_3$ einen Methyl-Rest bedeutet;
- n eine ganze Zahl von 0, 1, 2 oder 3 ist;
- das Symbol E eine einfache Valenzbindung oder eine Gruppe $-CH_2-$ ist, das sich in ortho-, meta- oder para-Stellung in bezug auf das Kohlenstoffatom des Benzol-Ringes befindet, das mit der Gruppe CONH verbunden ist.

2. Verfahren zur Herstellung von Polyamid-Imiden nach Anspruch 1, dadurch gekennzeichnet, daß es darin besteht, die nachfolgenden Reaktionspartner (i), (2i) und (3i) auf eine Temperatur von 50 °C bis 200 °C in Anwesenheit eines organischen Lösungsmittels oder einer Mischung organischer Lösungsmittel zu erhitzen, wobei die genannten Reagenzien gleichzeitig zur Reaktion gebracht werden:
- (i) ist ein Diisocyanat der Formel (III):

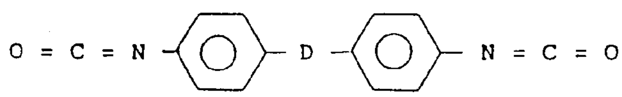

(III)

in der D die oben in der Formel (I) genannte Bedeutung besitzt;
- (2i) ist ein Tricarbonsäure-Monoanhydrid der Formel (IV):

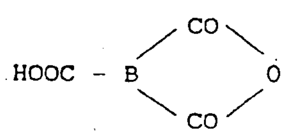

(IV)

in der B die oben in der Formel (I) genannte Bedeutung besitzt; und
- (3i) ist eine Monocarbonsäure, substituiert durch eine Maleimido-Gruppe (die wiederum gegebenenfalls substituiert ist) an dem Rest, der mit der Carboxy-Gruppe der Formel (V)

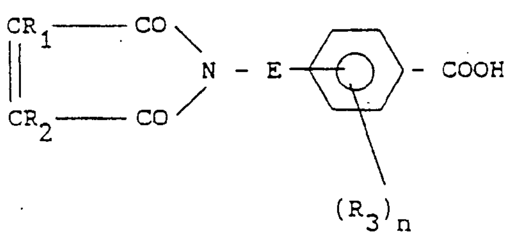

(V)

verbunden ist, in der die Symbole $R_1$, $R_2$, $R_3$, n und E die in der obengenannten Formel (II) angegebenen Bedeutungen besitzen;
- die jeweiligen Anteile der Reaktionspartner (i) und (2i) in der Weise ausgewählt werden, daß sich das Verhältnis r

$$\frac{\text{Anzahl Mole Diisocyanat (i)}}{\text{Anzahl Mole Anhydrid (2i)}}$$

im Intervall von 1,05/1 bis 2/1 bewegt;

- das Verhältnis des Reaktionspartners (3i) in der Weise ausgewählt wird, daß das Verhältnis r'

$$\frac{\text{Anzahl Mole Maleimidocarbonsäure(3i)}}{\text{Anzahl Mole Diisocyanat (i)} - \text{Anzahl Mole Anhydrid (2i)}}$$

gleich 2 ist.

**3.** Verfahren zur Herstellung nach Anspruch 2, dadurch gekennzeichnet, daß das Diisocyanat (i) der Formel (III) ausgewählt wird aus der folgenden Gruppe:
- 2,2-Diphenylpropan-4,4'-diisocyanat,
- Diphenylmethan-4,4'-diisocyanat,
- Biphenyl-4,4'-diisocyanat,
- Diphenylsulfid-4,4'-diisocyanat,
- Diphenylsulfon-4,4'-diisocyanat,
- Diphenylether-4,4'-diisocyanat,
- 1,1-Diphenyl-cyclohexan-4,4'-diisocyanat.

**4.** Verfahren zur Herstellung nach irgendeinem der Ansprüche 2 und 3, dadurch gekennzeichnet, daß das Tricarbonsäure-Monoanhydrid (2i) der Formel (IV) ausgewählt wird aus der folgenden Gruppe:
- Trimellitsäure-Monoanhydrid,
- Naphthalin-2,3,6-tricarbonsäure-2,3-monoanhydrid,
- Naphthalin-1,8,4-tricarbonsäure-1,8-monoanhydrid,
- Naphthalin-1,2,5-tricarbonsäure-1,2-monoanhydrid,
- Diphenyl-3,4,4'-tricarbonsäure-3,4-monoanhydrid,
- Diphenyl-ether-3,4,4'-tricarbonsäure-3,4-monoanhydrid,
- Benzophenon-3,4,4'-tricarbonsäure-3,4-monoanhydrid,
- Diphenyl-isopropyliden-3,4,3'-tricarbonsäure-3,4-monoanhydrid.

**5.** Verfahren zur Herstellung nach irgendeinem der Ansprüche 2 bis 4, dadurch gekennzeichnet, daß die Monocarbonsäure mit einem Substituenten vom Maleimido-Typ (3i) der Formel (IV) ausgewählt wird aus der folgenden Gruppe:
- 2-Maleimido-benzoesäure,
- 3-Maleimido-benzoesäure,
- 4-Maleimido-benzoesäure,
- 2-Citraconimido-benzoesäure,
- 3-Citraconimido-benzoesäure,
- 4-Citraconimido-benzoesäure,
- 4-(Maleimido-methyl)-benzoesäure.

**6.** Verfahren zur Herstellung nach irgendeinem der Ansprüche 2 bis 5, dadurch gekennzeichnet, daß man die gemeinsam eingesetzten Ausgangsprodukte (i), (2i) und (3i) in einem organischen Lösungsmittel oder in einer Mischung organischer Lösungsmittel auflöst, wobei man in der Wärme bei einer Temperatur zwischen 50 °C und 150 °C arbeitet, anschließend das Medium unter Rühren bei einer Temperatur wie die obengenannte der Auflösung oder bei Bedarf auch höheren Temperatur, so daß direkt oder schrittweise ein Wert von höchstens 200 °C erreicht wird, reagieren läßt, und zwar während eines Zeitraumes, der in großem Maße in Abhängigkeit von den genauen Bedingungen und der angewendeten Temperatur schwanken kann.

**7.** Verfahren zur Herstellung nach irgendeinem der Ansprüche 2 bis 6, dadurch gekennzeichnet, daß die verwendeten Lösungsmittel aus der folgenden Gruppe ausgewählt werden: N,N-Dimethylacetamid, N,N-Dimethylformamid, N-Methyl-2-pyrrolidon, Dimethylsulfoxid, 1,1,3,3-Tetramethylharnstoff, 1,3-Dimethylharnstoff und einer Mischung dieser Lösungsmittel.

**8.** Verwendung der funktionalisierten Polyamid-Imide nach Anspruch 1 für die Herstellung von vernetzten Polymeren durch Erhitzen auf eine Temperatur zwischen 150 °C und 300 °C, gegebenenfalls in Anwesenheit eines radikalischen Polymerisations-Initiators oder eines anionischen Polymerisations-Katalysators.

**Patentansprüche für folgenden Vertragsstaat : ES**

1. Verfahren zur Herstellung von linearen aromatischen Polyamid-Imiden, deren Ketten End-Gruppen vom Maleimido-Typ umfassen, gegebenenfalls substituiert an der ethylenischen Doppelbindung, die der folgenden Formel (I) entsprechen

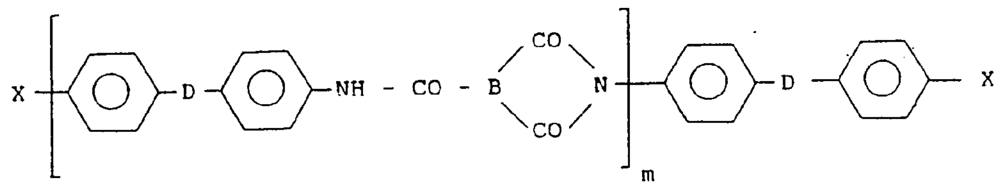

(I)

in der

- die jeweils gleichen Symbole D eine einfache Valenzbindung oder eine Gruppe

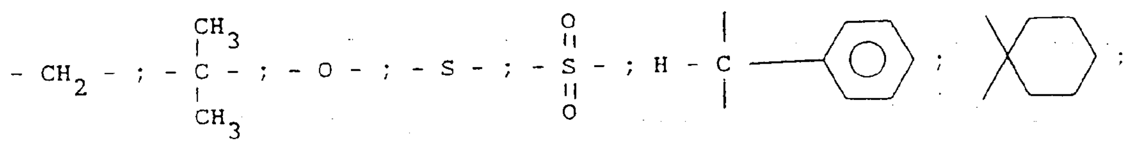

darstellen;

- das Symbol B einen trivalenten Rest bedeutet, der aus einem aromatischen, substituierten oder nicht substituierten Rest mit mindestens 6 Kohlenstoffatomen besteht, oder aus zwei dieser untereinander durch eine einfache Valenzbindung oder eine Gruppe

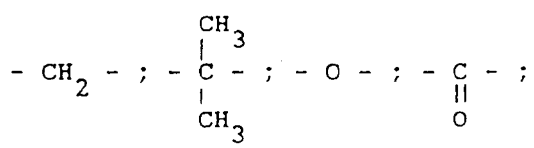

verbundenen Reste,

- das Symbol m eine mittlere Anzahl von wiederkehrenden Einheiten bedeutet, wobei diese Zahl mindestens 1 ist;
- die jeweils gleichen Symbole X einen Rest der Formel (II)

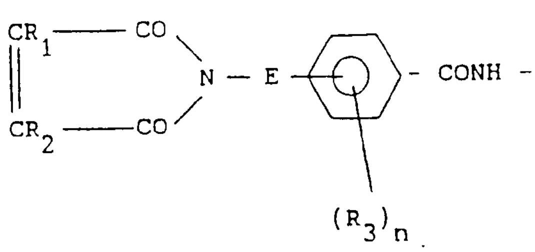

(II)

bedeuten, in der

* die Symbole $R_1$ und $R_2$, gleich oder verschieden, jeweils ein Wasserstoffatom oder einen Methyl-Rest darstellen;
* das Symbol $R_3$ einen Methyl-Rest bedeutet;
* n eine ganze Zahl von 0, 1, 2 oder 3 ist;
* das Symbol E eine einfache Valenzbindung oder eine Gruppe $-CH_2-$ ist, das sich in ortho-, meta- oder para-Stellung in bezug auf das Kohlenstoffatom des Benzol-Ringes befindet, das mit der Gruppe CONH verbunden ist, dadurch gekennzeichnet, daß es darin besteht, die nachfolgenden Reaktionspartner (i), (2i) und (3i) auf eine Temperatur von 50 °C bis 200 °C in Anwesenheit eines

organischen Lösungsmittels oder einer Mischung organischer Lösungsmittel zu erhitzen, wobei die genannten Reagenzien gleichzeitig zur Reaktion gebracht werden:

- (i) ist ein Diisocyanat der Formel (III):

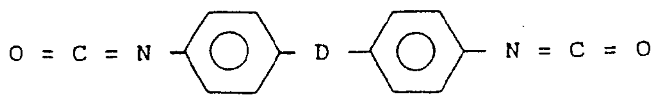

(III)

in der D die oben in der Formel (I) genannte Bedeutung besitzt;

- (2i) ist ein Tricarbonsäure-Monoanhydrid der Formel (IV):

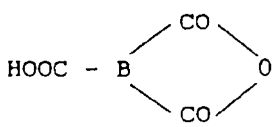

(IV)

in der B die oben in der Formel (I) genannte Bedeutung besitzt; und

- (3i) ist eine Monocarbonsäure, substituiert durch eine Maleimido-Gruppe (die wiederum gegebenenfalls substituiert ist) an dem Rest, der mit der Carboxy-Gruppe der Formel (V)

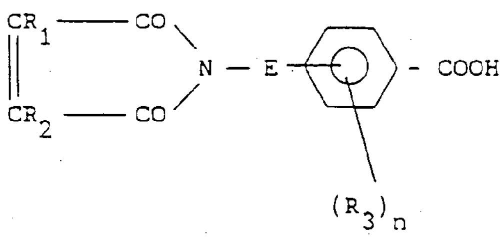

(V)

verbunden ist, in der die Symbole $R_1$, $R_2$, $R_3$, n und E die in der obengenannten Formel (II) angegebenen Bedeutungen besitzen;

- die jeweiligen Anteile der Reaktionspartner (i) und (2i) in der Weise ausgewählt werden, daß sich das Verhältnis r

$$\frac{\text{Anzahl Mole Diisocyanat (i)}}{\text{Anzahl Mole Anhydrid (2i)}}$$

im Intervall von 1,05/1 bis 2/1 bewegt;

- das Verhältnis des Reaktionspartners (3i) in der Weise ausgewählt wird, daß das Verhältnis r'

$$\frac{\text{Anzahl Mole Maleimidocarbonsäure(3i)}}{\text{Anzahl Mole Diisocyanat (i)} - \text{Anzahl Mole Anhydrid (2i)}}$$

gleich 2 ist.

**2.** Verfahren zur Herstellung nach Anspruch 1, dadurch gekennzeichnet, daß das Diisocyanat (i) der Formel (III) ausgewählt wird aus der folgenden Gruppe:

- 2,2-Diphenylpropan-4,4'-diisocyanat,
- Diphenylmethan-4,4'-diisocyanat,
- Biphenyl-4,4'-diisocyanat,
- Diphenylsulfid-4,4'-diisocyanat,
- Diphenylsulfon-4,4'-diisocyanat,
- Diphenylether-4,4'-diisocyanat,
- 1,1-Diphenyl-cyclohexan-4,4'-diisocyanat.

**3.** Verfahren zur Herstellung nach irgendeinem der Ansprüche 1 und 2, dadurch gekennzeichnet, daß das Tricarbonsäure-Monoanhydrid (2i) der Formel (IV) ausgewählt wird aus der folgenden Gruppe:

- Trimellitsäure-Monoanhydrid,
- Naphthalin-2,3,6-tricarbonsäure-2,3-monoanhydrid,

- Naphthalin-1,8,4-tricarbonsäure-1,8-monoanhydrid,
- Naphthalin-1,2,5-tricarbonsäure-1,2-monoanhydrid,
- Diphenyl-3,4,4'-tricarbonsäure-3,4-monoanhydrid,
- Diphenyl-ether-3,4,4'-tricarbonsäure-3,4-monoanhydrid,
- Benzophenon-3,4,4'-tricarbonsäure-3,4-monoanhydrid,
- Diphenyl-isopropyliden-3,4,3'-tricarbonsäure-3,4-monoanhydrid.

**4.** Verfahren zur Herstellung nach irgendeinem der Ansprüche 1 bis 3, dadurch gekennzeichnet, daß die Monocarbonsäure mit einem Substituenten vom Maleimido-Typ (3i) der Formel (V) ausgewählt wird aus der folgenden Gruppe:
- 2-Maleimido-benzoesäure,
- 3-Maleimido-benzoesäure,
- 4-Maleimido-benzoesäure,
- 2-Citraconimido-benzoesäure,
- 3-Citraconimido-benzoesäure,
- 4-Citraconimido-benzoesäure,
- 4-(Maleimido-methyl)-benzoesäure.

**5.** Verfahren zur Herstellung nach irgendeinem der Ansprüche 1 bis 4, dadurch gekennzeichnet, daß man die gemeinsam eingesetzten Ausgangsprodukte (i), (2i) und (3i) in einem organischen Lösungsmittel oder in einer Mischung organischer Lösungsmittel auflöst, wobei man in der Wärme bei einer Temperatur zwischen 50 °C und 150 °C arbeitet, anschließend das Medium unter Rühren bei einer Temperatur wie die obengenannte der Auflösung oder bei Bedarf auch höheren Temperatur, so daß direkt oder schrittweise ein Wert von höchstens 200 °C erreicht wird, reagieren läßt, und zwar während eines Zeitraumes, der in großem Maße in Abhängigkeit von den genauen Bedingungen und der angewendeten Temperatur schwanken kann.

**6.** Verfahren zur Herstellung nach irgendeinem der Ansprüche 1 bis 5, dadurch gekennzeichnet, daß die verwendeten Lösungsmittel aus der folgenden Gruppe ausgewählt werden: N,N-Dimethylacetamid, N,N-Dimethylformamid, N-Methyl-2-pyrrolidon, Dimethylsulfoxid, 1,1,3,3-Tetramethylharnstoff, 1,3-Dimethylharnstoff und einer Mischung dieser Lösungsmittel.

## Claims

### Claims for the following Contracting States : AT, BE, CH, DE, FR, GB, IT, LI, LU, NL, SE

**1.** Linear aromatic polyamideimides whose chains contain end groups of the maleimido type, substituted, if desired, on the ethylenic double bond, characterized in that they correspond to the following formula:

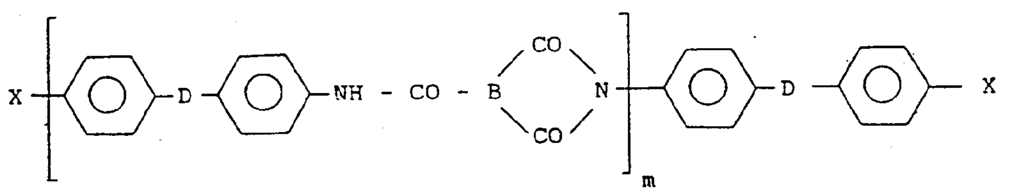
(I)

in which:
- each of the symbols D, which are identical, denotes a single valency bond or a group:

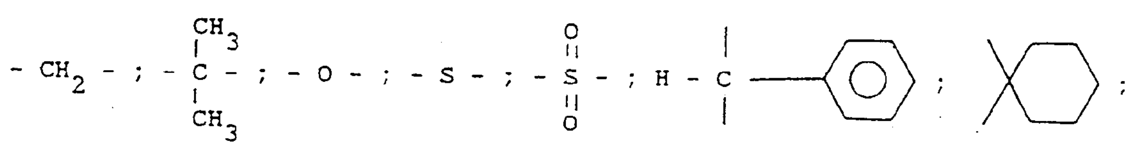

- the symbol B denotes a trivalent radical consisting of an aromatic radical containing at least 6 carbon atoms, substituted or otherwise, or of two of these radicals linked together by a single valency bond

or a group:

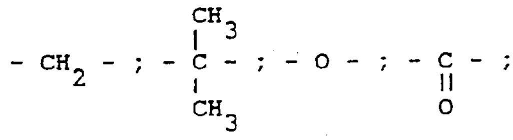

- the symbol m denotes the average number of the repeat units and it is at least equal to 1; and
- each of the symbols X, which are identical, denotes a radical of the formula:

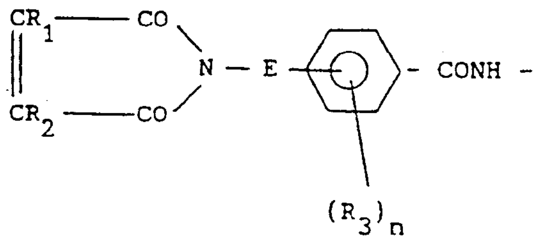

(II)

in which:

- each of the symbols $R_1$ and $R_2$, which are identical or different, denotes a hydrogen atom or a methyl radical;
- the symbol $R_3$ denotes a methyl radical:
- n is an integer equal to 0, 1, 2 or 3; and
- the symbol E denotes a single valency bond or a $-CH_2-$ group and is in an ortho, meta or para position relative to the carbon atom of the benzene ring which is linked to the CONH group.

**2.** Process for the preparation of the polyamideimides according to claim 1, characterized in that it consists in performing the heating of the following reactants (i), (2i) and (3i), the operation being carried out at a temperature ranging from 50°C to 200°C and in the presence of an organic solvent or a mixture of organic solvents, the said reactants being reacted simultaneously:

- (i) is a diisocyanate of formula:

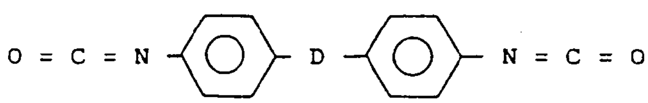

(III)

in which D has the meaning given above in formula (I);
- (2i) is a monoanhydride of a tricarboxylic acid of formula:

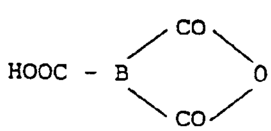

(IV)

in which B has the meaning given above in formula (I); and
- (3i) is a monocarboxylic acid substituted by a maleimido group (itself substituted if desired) on the residue attached to the carboxyl group, of formula:

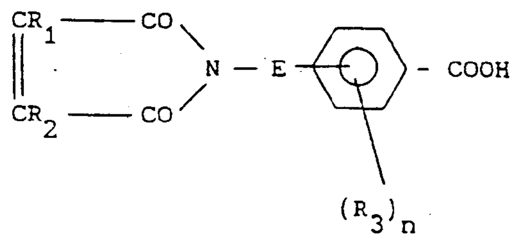

(V)

in which the symbols $R_1$, $R_2$, $R_3$, n, and E have the meanings given above in formula (II);

- the respective proportions of the reactants (i) and (2i) being chosen so that the ratio r:

$$\frac{\text{number of moles of diisocyanate (i)}}{\text{number of moles of anhydride (2i)}}$$

lies in the range from 1.05/1 to 2/1; and

- the proportion of the reactant (3i) being chosen so that the ratio r':

$$\frac{\text{number of moles of maleimido carboxylic acid (3i)}}{\text{number of moles of diisocyanate (i)} - \text{number of moles of anhydride (2i)}}$$

is equal to 2.

**3.** Process of preparation according to claim 2, characterized in that the diisocyanate (i) of formula (III) is chosen from the group consisting of:
- 4,4'-diisocyanato-2,2-diphenylpropane,
- 4,4'-diisocyanatodiphenylmethane,
- 4,4'-diisocyanatobiphenyl,
- 4,4'-diisocyanatodiphenyl sulfide,
- 4,4'-diisocyanatodiphenyl sulfone,
- 4,4'-diisocyanatodiphenyl ether, and
- 4,4'-diisocyanato-1,1-diphenylcyclohexane.

**4.** Process of preparation according to either of claims 2 and 3, characterized in that the monoanhydride of a tricarboxylic acid (2i) of formula (IV) is chosen from the group consisting of:
- the monoanhydride of trimellitic acid,
- the 2,3-monoanhydride of 2,3,6-naphthalenetricarboxylic acid,
- the 1,8-monoanhydride of 1,8,4-naphthalenetricarboxylic acid,
- the 1,2-monoanhydride of 1,2,5-naphthalenetricarboxylic acid,
- the 3,4-monoanhydride of 3,4,4'-diphenyltricarboxylic acid,
- the 3,4-monoanhydride of diphenyl ether 3,4,4'-tricarboxylic acid,
- the 3,4-monoanhydride of 3,4,4'-benzophenonetricarboxylic acid, and
- the 3,4-monoanhydride of 3,4,3'-diphenylisopropylidene tricarboxylic acid.

**5.** Process of preparation according to any one of claims 2 to 4, characterized in that the monocarboxylic acid containing a substituent of the maleimido type (3i) of formula (IV) is chosen from the group consisting of:
- 2-maleimidobenzoic acid,
- 3-maleimidobenzoic acid,
- 4-maleimidobenzoic acid,
- 2-citraconimidobenzoic acid,
- 3-citraconimidobenzoic acid,
- 4-citraconimidobenzoic acid, and
- 4-(maleimidomethyl)benzoic acid.

**6.** Process of preparation according to any one of claims 2 to 5, characterized in that the starting reactants (i), (2i) and (3i), which are used together, are dissolved in an organic solvent or in a mixture of organic solvents, the operation being carried out with heating to between 50°C and 150°C, and the mixture is then allowed to react, with stirring, at a temperature which is kept equal to the abovementioned dissolving temperature or raised, if need be, directly or progressively, to a value not exceeding 200°C for a reaction period which will vary to a large extent as a function of the precise temperature conditions which are adopted.

7. Process of preparation according to any one of claims 2 to 6, characterized in that the solvents used are taken from the group consisting of: N,N-dimethylacetamide, N,N-dimethylformamide, N-methyl-2-pyrrolidone, dimethyl sulfoxide, 1,1,3,3-tetramethylurea, 1,3-dimethylurea and a mixture of these solvents.

8. Use of the polyamideimides containing functional groups according to claim 1 for the preparation of cross-linked polymers by heating to a temperature of between 150°C and 300°C in the presence, if desired, of a radical polymerization initiator or of an anionic polymerization catalyst.

**Claims for the following Contrating State : ES**

1. Process for the preparation of linear aromatic polyamideimides whose chains contain end groups of the maleimido type, substituted, if desired, on the ethylenic double bond, which correspond to the following formula:

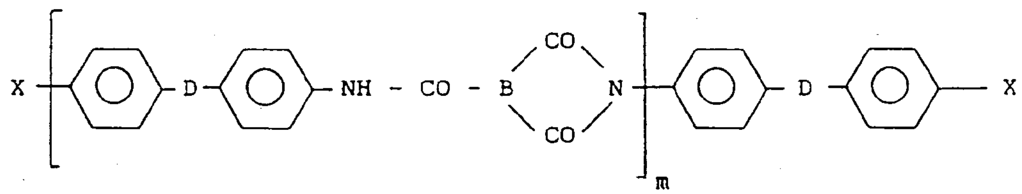

(I)

in which:

- each of the symbols D, which are identical, denotes a single valency bond or a group:

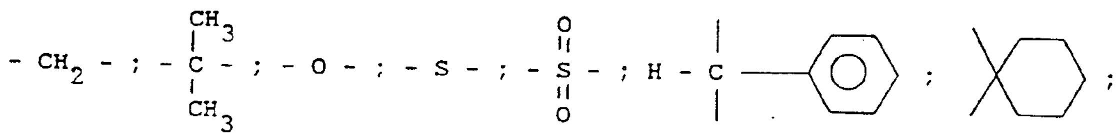

- the symbol B denotes a trivalent radical consisting of an aromatic radical containing at least 6 carbon atoms, substituted or otherwise, or of two of these radicals linked together by a single valency bond or a group:

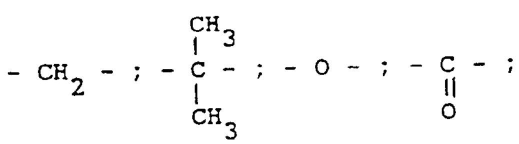

- the symbol m denotes the average number of the repeat units and it is at least equal to 1; and
- each of the symbols X, which are identical, denotes a radical of the formula:

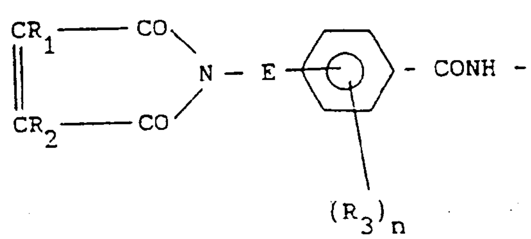

(II)

in which:

- each of the symbols $R_1$ and $R_2$, which are identical or different, denotes a hydrogen atom or a methyl radical;
- the symbol $R_3$ denotes a methyl radical:
- n is an integer equal to 0, 1, 2 or 3; and

- the symbol E denotes a single valency bond or a $-CH_2-$ group and is in an ortho, meta or para position relative to the carbon atom of the benzene ring which is linked to the CONH group; the said process being characterized in that it consists in performing the heating of the following reactants (i), (2i) and (3i), the operation being carried out at a temperature ranging from 50°C to 200°C and in the presence of an organic solvent or a mixture of organic solvents, the said reactants being reacted simultaneously:

- (i) is a diisocyanate of formula:

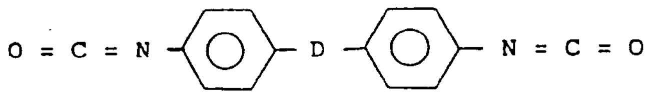

(III)

in which D has the meaning given above in formula (I);

- (2i) is a monoanhydride of a tricarboxylic acid of formula:

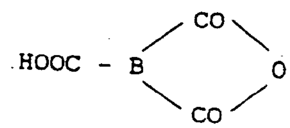

(IV)

in which B has the meaning given above in formula (I); and

- (3i) is a monocarboxylic acid substituted by a maleimido group (itself substituted if desired) on the residue attached to the carboxyl group, of formula:

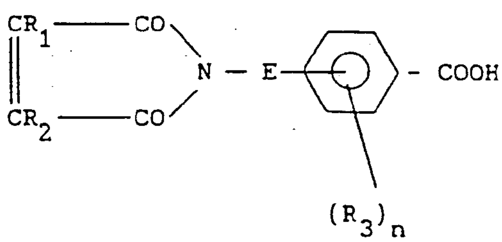

(V)

in which the symbols $R_1$, $R_2$, $R_3$, n, and E have the meanings given above in formula (II);

- the respective proportions of the reactants (i) and (2i) being chosen so that the ratio r:

$$\frac{\text{number of moles of diisocyanate (i)}}{\text{number of moles of anhydride (2i)}}$$

lies in the range from 1.05/1 to 2/1; and

- the proportion of the reactant (3i) being chosen so that the ratio r':

$$\frac{\text{number of moles of maleimidocarboxylicacid (3i)}}{\text{number of moles of diisocyanate (i)} - \text{number of moles of anhydride (2i)}}$$

is equal to 2.

2. Process of preparation according to claim 1, characterized in that the diisocyanate (i) of formula (III) is chosen from the group consisting of:
   - 4,4'-diisocyanato-2,2-diphenylpropane,
   - 4,4'-diisocyanatodiphenylmethane,
   - 4,4'-diisocyanatobiphenyl,
   - 4,4'-diisocyanatodiphenyl sulfide,
   - 4,4'-diisocyanatodiphenyl sulfone,
   - 4,4'-diisocyanatodiphenyl ether, and
   - 4,4'-diisocyanato-1,1-diphenylcyclohexane.

3. Process of preparation according to either of claims 1 and 2, characterized in that the monoanhydride of a tricarboxylic acid (2i) of formula (IV) is chosen from the group consisting of:

- the monoanhydride of trimellitic acid,
- the 2,3-monoanhydride of 2,3,6-naphthalenetricarboxylic acid,
- the 1,8-monoanhydride of 1,8,4-naphthalenetricarboxylic acid,
- the 1,2-monoanhydride of 1,2,5-naphthalenetricarboxylic acid,
- the 3,4-monoanhydride of 3,4,4'-diphenyltricarboxylic acid,
- the 3,4-monoanhydride of diphenyl ether 3,4,4'-tricarboxylic acid,
- the 3,4-monoanhydride of 3,4,4'-benzophenonetricarboxylic acid, and
- the 3,4-monoanhydride of 3,4,3'-diphenylisopropylidene-tricarboxylic acid.

**4.** Process of preparation according to any one of claims 1 to 3, characterized in that the monocarboxylic acid containing a substituent of the maleimido type (3i) of formula (V) is chosen from the group consisting of:

- 2-maleimidobenzoic acid,
- 3-maleimidobenzoic acid,
- 4-maleimidobenzoic acid,
- 2-citraconimidobenzoic acid,
- 3-citraconimidobenzoic acid,
- 4-citraconimidobenzoic acid, and
- 4-(maleimidomethyl)benzoic acid.

**5.** Process of preparation according to any one of claims 1 to 4, characterized in that the starting reactants (i), (2i) and (3i), which are used together, are dissolved in an organic solvent or in a mixture of organic solvents, the operation being carried out with heating to between 50°C and 150°C, and the mixture is then allowed to react, with stirring, at a temperature which is kept equal to the abovementioned dissolving temperature or raised, if need be, directly or progressively, to a value not exceeding 200°C for a reaction period which will vary to a large extent as a function of the precise temperature conditions which are adopted.

**6.** Process of preparation according to any one of claims 1 to 5, characterized in that the solvents used are taken from the group consisting of: N,N-dimethylacetamide ,N,N-dimethylformamide, N-methyl-2-pyrrolidone, dimethyl sulfoxide, 1,1,3,3-tetramethylurea, 1,3-dimethylurea and a mixture of these solvents.